# EUROPEAN PATENT SPECIFICATION

(11) **EP 2 756 657 B1**
(45) Date of publication and mention of the grant of the patent: **10.04.2019**
(21) Application number: 12864971.2
(22) Date of filing: 04.09.2012
(51) Int. Cl.: H04W 4/38, H04L 29/08, H04L 29/12, G06F 17/30

(54) **A SYSTEM FOR DYNAMIC SERVICE COLLABORATION THROUGH IDENTIFICATION AND CONTEXT OF PLURALITY OF HETEROGENEOUS DEVICES**
SYSTEM ZUR DYNAMISCHEN DIENSTZUSAMMENARBEIT DURCH IDENTIFIKATION UND KONTEXT MEHRERER HETEROGENER VORRICHTUNGEN
SYSTÈME DE COLLABORATION DE SERVICES DYNAMIQUE FAISANT APPEL À L'IDENTIFICATION ET AU CONTEXTE D'UNE PLURALITÉ DE DISPOSITIFS HÉTÉROGÈNES

(30) Priority: 12.09.2011 IN 2560MU2011
(43) Date of publication of application: 23.07.2014
(73) Proprietor: Tata Consultancy Services Limited, Mumbai 400 021 (IN)
(72) Inventor: BANDYOPADHYAY, Soma, Kolkata-700091 West Bengal (IN); MAITI , Souvik, Kolkata-700091 West Bengal (IN); SENGUPTA, Munmun, Kolkata-700091 West Bengal (IN); DUTTA, Subhajit, Kolkata-700091 West Bengal (IN)
(74) Representative: Potter Clarkson
(86) International application number: PCT/IN2012/000579
(87) International publication number: WO 2013/105104

(56) References cited:
- KR-A- 20070 010 230
- US-A1- 2002 152 211
- US-A1- 2006 020 633
- US-A1- 2006 217 934
- US-A1- 2011 113 136
- US-A1- 2011 131 339
- US-B2- 7 818 017
- CHEN ET AL: "Data-centric middleware for context-aware pervasive computing", PERVASIVE AND MOBILE COMPUTING, ELSEVIER, NL, vol. 4, no. 2, 22 October 2007 (2007-10-22), pages 216-253, XP022527976, ISSN: 1574-1192, DOI: 10.1016/J.PMCJ.2007.10.001
- DOULKERIDIS C ET AL: "CASD: Management of a context-aware service directory", PERVASIVE AND MOBILE COMPUTING, ELSEVIER, NL, vol. 4, no. 5, 1 October 2008 (2008-10-01) , pages 737-754, XP025431941, ISSN: 1574-1192, DOI: 10.1016/J.PMCJ.2008.05.001 [retrieved on 2008-05-08]
- HYUN KIM ET AL: "CAMUS: a middleware supporting context-aware services for network-based robots", ADVANCED ROBOTICS AND ITS SOCIAL IMPACTS, 2005. IEEE WORKSHOP ON NAGOYA, JAPAN JUNE 12-15, 2005, PISCATAWAY, NJ, USA,IEEE, 12 June 2005 (2005-06-12), pages 237-242, XP010838238, ISBN: 978-0-7803-8947-2
- GU T ET AL: "A service@?oriented middleware for building context@?aware services", JOURNAL OF NETWORK AND COMPUTER APPLICATIONS, ACADEMIC PRESS, NEW YORK, NY, US, vol. 28, no. 1, 1 January 2005 (2005-01-01), pages 1-18, XP004606433, ISSN: 1084-8045, DOI: 10.1016/J.JNCA.2004.06.002

## Description

### FIELD OF THE INVENTION

The present invention relates to internet and computing field. Particularly, the invention relates to a system and method for providing a faster way of collaboration of services based on the context information, in a dynamic manner.

### BACKGROUND OF THE INVENTION

Nowadays, with the evolution in the field of ubiquitous computing, a device discovery process, device management and context extraction is becoming more and more critical for an effective collaboration of services.

Though, generation of a unique device identifier during device discovery phase is generally known in the prior art, the prior art fails to teach a means to associate the extracted context of the devices and to achieve a service-context-device association along with recording of updated context of the devices.

Moreover, a device management system generally resides in a central or gateway system, does not allow the participating devices/sensors to maintain any context data base. Even though sensors are equipped to send device information, a problem lies in the loose coupling amongst device discovery, device identification, and its supported services and simultaneous tagging and refreshing of the extracted context of the device. Particularly, in cases where devices are not maintaining any context database by their own or by a device management system, maintaining the said loose coupling along with refreshing of extracted context of the device on regular intervals is still a challenge. Therefore, faster collaboration among the services is not achieved by retrieving the context information from the central device.

In patent application no US2007/0150817, Nicholas et al, discloses a frame work made up of user interface and some services in ubiquitous computing environment scenarios. Though Nicholas et al, discloses that each component can function as a data source and data sink, it emphasizes on the efficient handling of Host id and component id through an interactive GUI.

In an article "Memo Clip: A Location based Remembrance Appliance", Personal Technologies by Michael Beigl discloses a location-based awareness framework that doesn't teach association of a unique device identifier (id) with the device context information, while performing the discovery and managing the devices.

In an article "Providing Contextual Information to Ubiquitous Computing Applications," by Judd and P. Steenkiste discloses context information based request - response model which doesn't provide a means to associate and extract context information.

In an article "A SIP-based Device Communication Service for OSGi Framework" by D. Bushmitch et al. emphasizes on the session oriented device and service registration protocol which again lacks a suitable association to extract context of the device.

In an article "How to make Personal Smart Spaces Context-aware" by Ioanna Roussaki et al. discloses a Persist Context Model described which does not consider the service/operation id while creating a Context Identifier class for modeling the context. Roussaki et al. further discloses context data distribution and maintenance of attribute tables that are indexed by a device id, however fails to teach a means or method for aggregation of plurality of identifiers into a single id for retrieval purposes.

In a patent number US7847699 to Lee et al., teaches a context aware ubiquitous environment acting according to intentions of a user, context information further taught to collect from sensors. The apparatus is configured of a sensor platform, a context-aware agent and a service provider. Though Lee et al. teaches collection of context aware information and accordingly provides services to users, a dynamic updation of the context and retrieval of information to seek services can't be possible through a unique service key. Further though Lee teaches a ubiquitous context aware service exploitation by creating context data by analyzing and integrating real world data collected from sensors, it doesn't provide for a unique device and service identifier responsive to context information.

In a patent number US6, 601,097, Cheston et al., teaches an apparatus for capturing and storing the media access control (MAC) address of the connected computer and the present location for the same. The requester application interested in the location of a particular system transmits/broadcasts an UDP (User Datagram Protocol) packet to an UDP port in the network and the requested information is retrieved from the network.

Though Cheston et al., teaches contextual information that is limited to location only. Whereas in US7730208 issued to Saha et al. and in US7620737 issued to Newman et al., except MAC address and contextual information no other information is exchanged. Further context-aware service provision schemes are known from US patent application US2006/020633 and from the article "data-centric middleware for context-aware pervasive computing" by Chen et al. (PERVASIVE AND MOBILE COMPUTING, ELSEVIER, vol. 4, no. 2, 22 October 2007, pages 216-253, ISSN: 1574-1192, DOI: 10.1016/J.PMCJ.2007.10.001).

The aforesaid teaching of the prior art are based on context information extraction, along with address and context management, and configuration of the devices based on the contextual information of the initial discovered devices. Being loosely coupled, these approaches fail to perform any service collaboration based on the extracted context of the devices, and does not support unique device and service identifier for multiservice capable devices environment.

Thus there exists a need to address a problem of providing a faster way of getting update about the context of the heterogeneous devices/sensors and further getting faster way of collaboration of the services based on the context using unique device identifier.

### OBJECT OF THE INVENTION

The primary object of the present invention is to provide a ubiquitous/smart computing system adapted for context aware collaborative service provisioning of plurality of heterogeneous devices/sensors.

Another object of the present invention is to provide a method and system adapted for a faster way of receiving updates about context of the device/sensor by any service seeking the context of the devices.

Another object of the present invention is to provide a method and system adapted for device discovery process, device management, and collaboration of service based on the context retrieved from the devices/sensors.

Another object of the present invention is to provide a method and system adapted to create a unique device identifier by associating context information of the device, unique medium access control (MAC) address of the device, and an operation / service identifier, while performing the device registration during device discovery.

Another object of the present invention is to provide a method and system for providing a mechanism to perform faster collaboration among the services by retrieving context information from the central device using the service identifier which is a part of device identifier as a key element.

Yet another object of the present invention is to provide mechanism of service and device mapping using an/a edge/central system, and also collaboration of services based on the context.

Yet another object of the present invention is to provide device registration method for creating a device identifier by tagging the device MAC address with context, and the service identifier of service provided by the device, hence a faster way of extracting the context mapped by the services and device identifier.

### SUMMARY OF THE INVENTION

Before the present methods, systems, and hardware enablement are described, it is to be understood that this invention in not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

The present invention relates to an ubiquitous computing system for context aware collaborative service provisioning of plurality of heterogeneous sensors within any smart space, the system comprises of: a service collaboration platform adapted to receive plurality of devices/sensors information; a plurality of heterogeneous distributed sensors communicatively coupled with the service collaboration platform, sensors have an unique device identifier and service identifier corresponding to the service they provide. The service identifier is configured to act as a key; a device management module is adapted to discover and register plurality of connected devices and is configured to receive sensor information from each device/sensor; a device/sensor management module is configured to correlate each sensor information with its device identifier, its context, service it provides, and associated time value of context extraction; a device identification table (service-context-deviceid) is updated dynamically based on the captured context information of each sensor corresponding to its device identifier and service identifier; a context extraction module part of device management module configured to intermittently run a scan at a predefined time interval to extract context information of sensor and update the device identification table; and at least one service request to the service collaboration platform is configured to retrieve at least one device-service-context relation from the device identifier table using service id as key corresponding to at least one sensor.

The current invention provides a mechanism to perform faster collaboration among the services by retrieving the context information from the central device/gateway with service id as a key element. The context information and the service identifier (id) of the performed service by the devices/sensors are tagged with the device media access control (MAC) identifier to generate the device identifier. The service id accordingly is used to detect the associated device identifier for extraction of the context from the detected device identifier and further collaboration of services is performed based on the said context.

In another aspect of the invention a method and system is provided for context extraction wherein the context is extracted and updated periodically by an active scan method/service. Further a service collaboration platform is disclosed that is adapted to receive plurality of device/sensor information using plurality of heterogeneous distributed sensors communicatively coupled with the service collaboration platform, each sensor has a unique device identifier and associated service identifier. The invention is defined by system claim 1 and method claim 6.

### BRIEF DESCRIPTION OF THE DRAWINGS

The accompanying drawings, which are included to provide a further understanding of the invention and are incorporated in and constitute a part of this application, illustrate embodiment of the invention and together with the description serve to explain the principle of the invention.
Figure 1 is a block diagram illustrating a system for collaboration of services based on the context information.
Figure 2 is an exemplary example explaining ubiquitous computing system for context aware collaborative service.

### DETAILED DESCRIPTION OF THE INVENTION

Some embodiments of this invention, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described. The disclosed embodiments are merely exemplary of the invention, which may be embodied in various forms.

Reference will now be made in detail to the preferred embodiments of the present invention, examples of which are illustrated in the accompanying drawings.

A ubiquitous computing system for context aware collaborative service provisioning of plurality of heterogeneous sensors within any smart space, the system comprises of:
a. a service collaboration platform adapted to receive plurality of sensor/device information;
b. a plurality of heterogeneous distributed sensors/devices communicatively coupled with the service collaboration platform, each sensor/device having an unique device identifier and associated service identifier;
c. a service identifier is associated with each sensor/device, service identifier is configured to act as a key;
d. a device/sensor management module adapted to create a device identifier by associating with context information, unique medium access control (MAC) address of the device, and an operation / service id while performing discovery and registration of plurality of connected devices/sensors;
e. a device/sensor management module configured to correlate sensor information with its device identifier, associated service, and the received context information from the sensors/devices periodically;
f. a device identification table (service-context-deviceid) configured to dynamically update the context information of each sensor corresponding to the sensor/device's MAC address and service id by the device management module;
g. a context extraction module which is part of device management module configured to intermittently run a scan at a predefined time interval to extract context information of sensor; and
h. at least one service request to the service collaboration platform is configured to retrieve at least one device-service-context relation from the device identifier table using service id as key corresponding to at least one sensor.

A ubiquitous computing method for context aware collaborative service provisioning of plurality of heterogeneous sensors within any smart space, the method comprising the steps of;
a. configuring a unique device identifier for each sensor of heterogeneous distributed sensors which are communicatively coupled with a service collaboration platform;
b. receiving plurality of sensor information to the service collaboration platform;
c. creating an association of service identifier for each sensor (device) with the corresponding device identifier and each service identifier is configured to act as a key, while fetching the sensor/device context information;
d. receiving sensor (device) information inside the service collaboration platform via a device management module;
e. creating unique device identifier by a central/gateway system associating context information, unique medium access control (MAC) address of the device/sensor, and an operation / service identifier, while performing the device registration via a device management module.
f. configuring a sensor/device management module to correlate each sensor context information with its MAC identifier and its associated service;
g. configuring a device identification table (service-context-deviceid) dynamically based on the captured context information of each sensor corresponding to its device identifier by using context extraction module which is a part of device management module. The Device management module is in turn configured to intermittently run a scan at a predefined time interval for updating the context information of sensor into the device identifier table; and
h. configuring at least one service request to the service collaboration platform to retrieve at least one device-service-context relation from the device identifier table using service id as key, corresponding to at least one sensor.

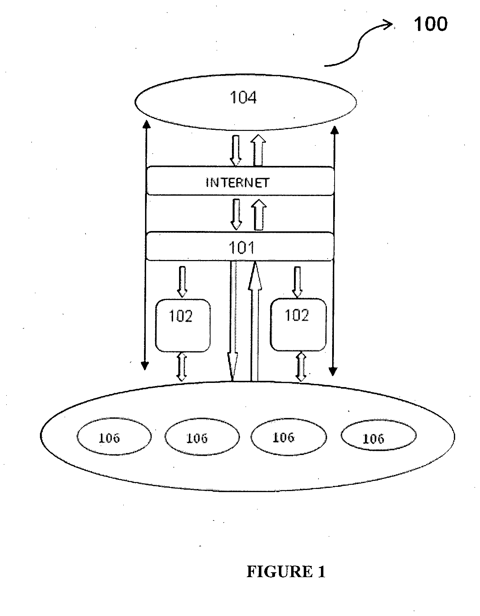

Referring to figure 1 is a system for collaboration of services based on the context /service identifier. The ubiquitous computing system 100 for context aware collaborative services comprises of a central control system 101, management module 102, multiple services 104, and a plurality of heterogeneous sensors/devices 106.

In one embodiment of the invention the central system 101 is adapted to receive sensor information including the context from the sensors/ devices. The central system 101 comprises a device management module 102. The device management module 102 is adapted to maintain unique device identifier and used to associate the services with the device context. Unique device identifier is created by associating the device MAC address, context information of the device and the associated service identifier of the service/operation performed by the sensor/device. The devices/sensors are co-operative in nature capable of providing different services. According to one exemplary embodiment of the invention services use the service identifier part of device identifier as the key to extract the context information. Multiple services can retrieve the context of the associated sensor/device, using the service identifier of the service provided by that device, and collaborate with each other based on the retrieved context of the devices to generate the final output.

For each discovered device a unique device identifier is created by the device management module and for subsequent registration thereof an association map of plurality of device specific aspects is generated, the association map comprising a unique media access control (MAC) address of the device, extracted context information of the device, and an operation / service identifier of the device.

In another embodiment of the invention the central control system 101 configured with a context extraction module which is a part of device management module to intermittently run a scan to fetch the sensor information including context at a predefined time interval for updating the context information of sensor into the device identifier table.

According to one exemplary embodiment of the invention the context information is getting refreshed / updated based on a specific time interval set by the user. The service collaboration is dynamic in nature, based on the latest contextual information. The device/sensor does not maintain any context information database within it.

In another embodiment of the invention multiple services 104 are adapted to function as part of a cloud computing system or as any other distributed environment architecture. The service 104 resides in cloud interacts with the control system 101. The services 104 perform collaboration based on the context information received from the various diverse sensor devices 106 by accessing the device identifier from the (service-context-deviceid) device identifier table, using service id as key.

In another embodiment of the invention the plurality of heterogeneous sensor/ device 106 directs sensing information to the central control system 101. According to one exemplary embodiment of invention a plurality of heterogeneous distributed sensors 106 is communicatively coupled with the service collaboration platform, wherein each sensor 106 having a unique device identifier and associated service identifier.

The system 100 further comprises a device/sensor management module configured to receive sensor information from the sensor devices 106 and correlate each sensor - information with sensor/device MAC identification and its context , service it provides, and associated time value. The said sensor management module includes a device identifier (service-context-deviceid) table configured to dynamically record each update of each sensor's context data corresponding to its MAC identifier and service identifier.

The system 100 further comprises at least one service request to the service collaboration platform is configured to retrieve at least one set of context information of the sensor from the table maintained by the device management module 102 using service id as key.

In another embodiment of the invention the device identifier creation as proposed by the current invention creates unique device identifier by associating the device Media Access Control (MAC) address, context information of the device/sensor 106 and the associated service identifier of the service/operation performed by the device/sensor 106. The devices 106 are capable of performing different services.

### Example 1:

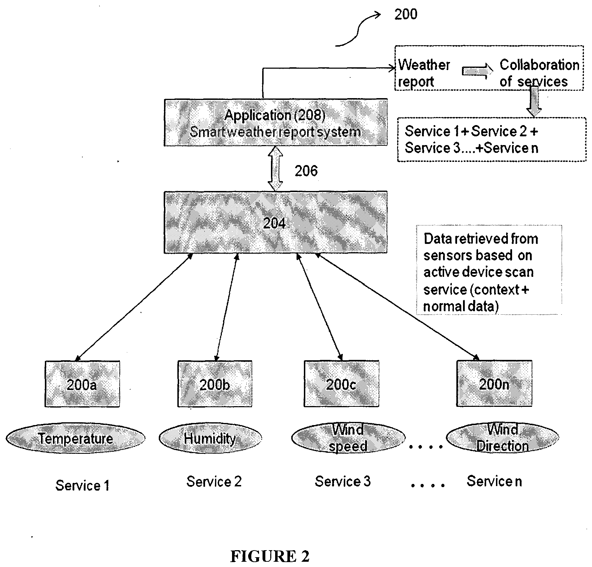

Figure 2 is an exemplary example explaining ubiquitous computing system for context aware collaborative service.

Figure 2 illustrates smart weather system 200. The system 200 comprises plurality of sensors (200a, 200b, 200c, and 200n) adapted for generating sensor information. The sensors enable the system 200 for generating sensor information relating temperature, wind speed, humidity and wind direction, chances of rain etc.

The system 200 further comprises a central system 204 adapted to receive information from the sensor devices (200a, 200b,200c, and 200n) and direct information to the service collaboration application 208 to the final application which generates the weather report after collaborating the results/outputs like temperature, wind speed, geographical location etc. from the various responsible services . The system 200 further comprises a device/sensor management module which performs active device scan and is adapted to retrieve data from sensors (200a, 200b, 200c, and 200n) and also updating and refreshing context information.

The system 200 creates a service and device mapping using the central system 204, and also adapted for collaboration of services based on the context. The invention does not use any architecture using context management system separately.

The system 200 employs a device registration method. The system creates a device identifier by tagging its MAC address with context as well as service identifier of the service provided by the device, and further adapted for getting faster way of extracting the context from the device identifier. The system 200 enables faster way of collaboration of services based on the context dynamically.

The system 200 creates the device identifier by the central system 204 with associating context information, unique medium control access address of the device, and an operation / service identifier, while performing the device registration. The system 200 is configured with a context extraction module as a part of device management module to intermittently run a scan at a predefined time interval for updating the context information of sensors/devices into the device identifier table.

It will be apparent to those skilled in the art that various modifications and variations can be made in the present invention. Thus, it is intended that the present invention covers the modifications and variations of this invention provided they come within the scope of the appended claims and their equivalents.

## Claims

1. A ubiquitous computer implemented system (100) for context aware collaborative service provisioning of a plurality of heterogeneous distributed devices (106) within a smart space, the system comprising:
a. a service collaboration platform (104, 208) adapted to receive plurality of device information;
b. the plurality of heterogeneous distributed devices communicatively coupled with the service collaboration platform, wherein each device comprises an unique device identifier and a corresponding service identifier;
c. the service identifier associated with the context aware collaborative service provided by each device, wherein the service identifier is configured to act as a key;
d. a device management module (102) adapted to create a device identifier by associating medium access control, MAC, address of the device with corresponding context information, and the service identifier;
e. the device management module configured to correlate each device information with the MAC address of the device, the associated service identifier, the context information and associated time value of the context information;
f. a device identification table configured to dynamically update the context information of the each of the plurality of heterogeneous distributed device corresponding to the MAC address of the each of the plurality of heterogeneous distributed devices, and the service identifier of the service provided by each of the plurality of heterogeneous distributed devices;
g. a context extraction module configured to run a scan at a predefined time interval to extract the context information of the plurality of heterogeneous distributed devices; and
h. at least one service request to the service collaboration platform is configured to retrieve at least one set of context information from the device identifier table using the service identifier as a key corresponding to at least one of the plurality of heterogeneous distributed devices.

2. The system as claimed in claim 1, wherein for each discovered device a unique device identifier is created by the device management module and for subsequent registration thereof an association map of plurality of device specific aspects is generated, the device identifier comprises a media access control, MAC, address of the device, extracted context information of the device, and the service identifier of the service provided by the device.

3. The system as claimed in claim 1, further comprises of a central control system (101) for maintaining at least one device management module.

4. The system as claimed in claim 1, wherein the context extraction module, performs the context extraction during a device discovery phase and parses the extracted context, to create the device identifier.

5. The system as claimed in claim 1, wherein each instance of the context information associated with the device and the corresponding services thereof are tagged with the device identifier.

6. A ubiquitous computer implemented method, for context aware collaborative service provisioning of a plurality of heterogeneous distributed devices (106) within a smart space, the method comprising:
a. configuring a unique device identifier for a plurality of heterogeneous distributed devices communicatively coupled with a service collaboration platform (104, 208);
b. receiving plurality of device information to the service collaboration platform;
c. creating an association of a service identifier of the context aware collaborative service provided by each of the plurality of heterogeneous distributed devices with a medium access control, MAC, address of the each of the plurality of heterogeneous distributed devices, and the corresponding context information, where the service identifier is configured to act as a key;
d. receiving the device information on the service collaboration platform via a device management module (102);
e. configuring a device management module to correlate each device information with the MAC address, the service identifier, the corresponding context information and an associated time value of the context information;
f. configuring a device identification table to dynamically update the context information of the each of the plurality of heterogeneous distributed devices corresponding to the MAC address of the each of the plurality of heterogeneous devices and a service identifier;
g. configuring a context extraction module configured to run a scan at a predefined time interval to extract the context information of the plurality of heterogeneous devices; and
h. configuring at least one service request to the service collaboration platform to retrieve at least one set of context information from the device identifier table using the service identifier as a key corresponding to at least one of the plurality of heterogeneous distributed devices.

7. The method as claimed in claim 6, further comprising updating the context information by performing periodic scan of the device by the device management module at a user specified time interval.

8. The method as claimed in claim 6, wherein a unique device identifier created by a device management module generates specific aspects of an association map of the plurality of heterogeneous distributed devices, and wherein the device identifier comprises a media access control, MAC, address of the device, the extracted context information of the device, and an operation/service identifier of the service performed by the device.

9. The method as claimed in claim 6, wherein each instance of the context information of the device is tagged with the corresponding device MAC address and the service identifier of the service provided by the device.

## Patentansprüche

1. Allgegenwärtiges computerimplementiertes System (100) zur kontextbewussten kollaborativen Diensterbringung mehrerer heterogen verteilten Vorrichtungen (106) in einem intelligenten Raum, wobei das System Folgendes umfasst:
a. eine Dienstzusammenarbeitsplattform (104, 208), die zum Empfangen von mehreren Vorrichtungsinformationenangepasst ist;
b. die mehreren heterogen verteilten Vorrichtungen, die kommunikativ mit der Dienstzusammenarbeitsplattform gekoppelt sind, wobei jede Vorrichtung eine eindeutige Vorrichtungskennung und eine entsprechende Dienstkennung umfasst;
c. die Dienstkennung, die dem von jeder Vorrichtung bereitgestellten kontextsensitiven kollaborativen Dienst zugeordnet ist, wobei die Dienstkennung so konfiguriert ist, dass sie als Schlüssel fungiert;
d. ein Vorrichtungsverwaltungsmodul (102), das angepasst ist, um eine Vorrichtungskennung zu erzeugen, indem es die Medienzugriffssteuerung, die MAC-Adresse der Vorrichtung mit entsprechenden Kontextinformationen und die Dienstkennung verknüpft;
e. das Vorrichtungsverwaltungsmodul, das konfiguriert ist, um jede Vorrichtungsinformation mit der MAC-Adresse der Vorrichtung, der zugehörigen Dienstkennung, der Kontextinformation und dem zugehörigen Zeitwert der Kontextinformation zu korrelieren;
f. eine Vorrichtungsidentifikationstabelle, die so konfiguriert ist, dass sie die Kontextinformationen jedes der mehreren heterogen verteilten Vorrichtungen, die der MAC-Adresse jedes der mehreren heterogen verteilten Vorrichtungen entsprechen, und die Dienstkennung des Dienstes, der von jeder der mehreren heterogen verteilten Vorrichtungen bereitgestellt wird;
g. ein Kontextextraktionsmodul, das konfiguriert ist, um eine Abtastung in einem vordefinierten Zeitintervall durchzuführen, um die Kontextinformationen der mehreren heterogen verteilten Vorrichtungen zu extrahieren; und
h. mindestens eine Dienstanforderung an die Dienstzusammenarbeitsplattform, der so konfiguriert ist, dass sie mindestens einen Satz von Kontextinformationen aus der Vorrichtungskennungstabelle unter Verwendung der Dienstkennung als Schlüssel abruft, der mindestens einem der mehreren heterogen verteilten Geräte entspricht.

2. System nach Anspruch 1, wobei für jede erfasste Vorrichtung eine eindeutige Vorrichtungskennung durch das Vorrichtungsmanagementmodul erstellt wird und für deren anschließende Registrierung eine Zuordnungsliste mit mehreren gerätespezifischen Aspekten erzeugt wird, wobei die Vorrichtungskennung eine Medienzugriffssteuerung, die MAC-Adresse der Vorrichtung, extrahierte Kontextinformationen der Vorrichtung und die Dienstkennung des von der Vorrichtung bereitgestellten Dienstes umfasst.

3. System nach Anspruch 1, ferner umfassend ein zentrales Steuersystem (101) zum Warten mindestens eines Vorrichtungsverwaltungsmoduls.

4. System nach Anspruch 1, wobei das Kontextextraktionsmodul die Kontextextraktion während einer Vorrichtungsentdeckungsphase durchführt und den extrahierten Kontext analysiert, um die Gerätekennung zu erzeugen.

5. System nach Anspruch 1, wobei jede Instanz der Kontextinformationen, die mit der Vorrichtung und den entsprechenden Diensten davon mit der Vorrichtungskennung markiert ist.

6. Allgegenwärtiges computerimplementiertes Verfahren zur kontextbewussten kollaborativen Diensterbringung von mehreren heterogen verteilten Vorrichtungen (106) in einem intelligenten Raum, wobei das Verfahren Folgendes umfasst:
a. Konfigurieren einer eindeutigen Vorrichtungskennung für mehrere heterogene verteilte Vorrichtungen, die kommunikativ mit einer Dienstzusammenarbeitsplattform (104, 208) gekoppelt sind;
b. Empfangen mehrerer Vorrichtungsinformationen an die Dienstzusammenarbeitsplattform;
c. Erzeugen einer Zuordnung einer Dienstkennung des kontextbewussten kollaborativen Dienstes, der von jeder der mehreren heterogen verteilten Vorrichtungen mit einer Medienzugriffssteuerung, der MAC-Adresse der einzelnen der mehreren heterogen verteilten Vorrichtungen und den entsprechenden Kontextinformationen bereitgestellt wird, wobei die Dienstkennung konfiguriert ist, um als Schlüssel zu fungieren;
d. Empfangen der Vorrichtungsinformationen auf der Dienstzusammenarbeitsplattform über ein Vorrichtungsverwaltungsmodul (102);
e. Konfigurieren eines Vorrichtungsverwaltungsmoduls, um jede Vorrichtungsinformation mit der MAC-Adresse, der Dienstkennung, den entsprechenden Kontextinformationen und einem zugehörigen Zeitwert der Kontextinformationen zu korrelieren;
f. Konfigurieren einer Vorrichtungsidentifikationstabelle, um die Kontextinformationen der einzelnen der mehreren heterogen verteilten Vorrichtungen dynamisch zu aktualisieren, die der MAC-Adresse der einzelnen der mehreren heterogenen Vorrichtungen und einer Dienstkennung entsprechen;
g. Konfigurieren eines Kontextextraktionsmoduls, das konfiguriert ist, um eine Abtastung in einem vordefinierten Zeitintervall durchzuführen, um die Kontextinformationen der mehreren heterogenen Vorrichtungen zu extrahieren; und
h. Konfigurieren mindestens einer Dienstanforderung an die Dienstzusammenarbeitsplattform, um mindestens einen Satz von Kontextinformationen aus der Vorrichtungskennungstabelle abzurufen, wobei die Dienstkennung als Schlüssel verwendet wird, der mindestens einer der mehreren heterogen verteilten Vorrichtungen entspricht.

7. Verfahren nach Anspruch 6, ferner umfassend das Aktualisieren der Kontextinformationen durch Ausführen einer periodischen Abtastung der Vorrichtung durch das Vorrichtungsverwaltungsmodul in einem benutzerdefinierten Zeitintervall.

8. Verfahren nach Anspruch 6, wobei eine eindeutige Vorrichtungskennung, die durch ein Vorrichtungsmanagementmodul erzeugt wird, spezifische Aspekte einer Zuordnungslandkarte mehrerer heterogen verteilten Vorrichtungen erzeugt, und wobei die Vorrichtungskennung eine Medienzugriffssteuerung, die MAC-Adresse der Vorrichtung, die extrahierten Kontextinformationen der Vorrichtung und eine Betriebs-/Dienstkennung des von der Vorrichtung ausgeführten Dienstes umfasst.

9. Verfahren nach Anspruch 6, wobei jede Instanz der Kontextinformationen der Vorrichtung mit der entsprechenden MAC-Adresse der Vorrichtung und der Dienstkennung des von der Vorrichtung bereitgestellten Dienstes gekennzeichnet ist.

## Revendications

1. Système mis en oeuvre par ordinateur ubiquitaire (100) pour la fourniture de services collaboratifs contextuel d'une pluralité de dispositifs distribués hétérogènes (106) dans un espace intelligent, le système comprenant :
a. une plateforme de collaboration de service (104, 208) conçue pour recevoir une pluralité de dispositifs d'informations ;
b. la pluralité de dispositifs distribués hétérogènes couplés de manière communicative avec la plateforme de collaboration de service, chaque dispositif comprend un identifiant de dispositif unique et un identifiant de service correspondant ;
c. l'identifiant de service associé au service collaboratif contextuel fourni par chaque dispositif, dans lequel l'identifiant de service est configuré pour agir comme clé ;
d. un module de gestion de dispositif (102) adapté pour créer un identifiant de dispositif en associant une commande d'accès au support (MAC), l'adresse du dispositif avec les informations de contexte correspondantes et l'identifiant de service ;
e. le module de gestion de dispositif configuré pour corréler chaque information de dispositif avec l'adresse MAC du dispositif, l'identifiant de service associé, les informations de contexte et la valeur temporelle associée des informations de contexte ;
f. une table d'identification de dispositif configurée pour mettre à jour dynamiquement les informations de contexte de chacun de la pluralité de dispositifs distribués hétérogènes correspondant à l'adresse MAC de chacun de la pluralité de dispositifs distribués hétérogènes, et l'identifiant de service du service fourni par chacun de la pluralité de dispositifs distribués hétérogènes ;
g. un module d'extraction de contexte configuré pour exécuter une analyse à un intervalle de temps prédéfini pour extraire les informations de contexte de la pluralité de dispositifs distribués hétérogènes ; et
h. au moins une demande de service adressée à la plateforme de collaboration de service est configurée pour extraire au moins un ensemble d'informations de contexte de la table d'identifiant de dispositif en utilisant l'identifiant de service comme clé correspondant à au moins un dispositif parmi la pluralité de dispositifs distribués hétérogènes.

2. Système selon la revendication 1, dans lequel pour chaque dispositif découvert, un identifiant de dispositif unique est créé par le module de gestion de dispositif et pour son enregistrement ultérieur, une carte d'association de pluralité d'aspects spécifiques de dispositif est générée, l'identifiant de dispositif comprend une commande d'accès au support (MAC), l'adresse du dispositif, les informations de contexte extraites du dispositif et l'identifiant de service du service fourni par le dispositif.

3. Système selon la revendication 1, comprenant en outre un système de commande central (101) pour maintenir au moins un module de gestion de dispositif.

4. Système selon la revendication 1, dans lequel le module d'extraction de contexte effectue l'extraction de contexte pendant une phase de découverte de dispositif et analyse le contexte extrait pour créer l'identifiant de dispositif.

5. Système selon la revendication 1, dans lequel chaque instance de l'information de contexte associé au dispositif et aux services correspondants de ceux-ci sont étiquetés avec l'identifiant de dispositif.

6. Procédé mis en oeuvre par ordinateur ubiquitaire pour la fourniture de services collaboratifs en tenant compte du contexte d'une pluralité de dispositifs distribués hétérogènes (106) dans un espace intelligent, le procédé comprenant :
a. la configuration d'un identifiant de dispositif unique pour une pluralité de dispositifs distribués hétérogènes couplés de manière communicative, avec une plateforme de collaboration de service (104, 208) ;
b. la réception d'une pluralité d'informations de dispositif sur la plateforme de collaboration de service ;
c. la création d'une association d'un identifiant de service du service collaboratif sensible au contexte fourni par chacun de la pluralité de dispositifs distribués hétérogènes avec une commande d'accès au support (MAC), l'adresse de chacun de la pluralité de dispositifs distribués hétérogènes et les informations de contexte correspondantes, l'identifiant de service étant configuré pour agir comme une clé ;
d. la réception des informations de dispositif sur la plateforme de collaboration de service par l'intermédiaire d'un module de gestion de dispositif (102) ;
e. la configuration d'un module de gestion de dispositif pour mettre en corrélation chaque information de dispositif avec l'adresse MAC, l'identifiant de service, les informations de contexte correspondantes et une valeur temporelle associée des informations de contexte ;
f. la configuration d'une table d'identification de dispositif pour mettre à jour dynamiquement les informations de contexte de chacun de la pluralité de dispositifs distribués hétérogènes correspondant à l'adresse MAC de chacun de la pluralité de dispositifs hétérogènes et d'un identifiant de service ;
g. la configuration d'un module d'extraction de contexte configuré pour lancer une analyse à un intervalle de temps prédéfini pour extraire les informations de contexte de la pluralité de dispositifs hétérogènes ; et
h. la configuration d'au moins une demande de service adressée à la plateforme de collaboration de service est conçue pour extraire au moins un ensemble d'informations de contexte de la table d'identifiant de dispositif en utilisant l'identifiant de service comme une clé correspondant à au moins l'une de la pluralité de dispositifs distribués hétérogènes.

7. Procédé selon la revendication 6, comprenant en outre la mise à jour des informations de contexte en effectuant une analyse périodique du dispositif par le module de gestion de dispositif à un intervalle de temps spécifié par l'utilisateur.

8. Procédé selon la revendication 6, dans lequel un identifiant de dispositif unique créé par un module de gestion de dispositif génère des aspects spécifiques d'une carte d'association de la pluralité de dispositifs distribués hétérogènes, et dans lequel l'identifiant de dispositif comprend une commande d'accès au support (MAC), l'adresse du dispositif, les informations de contexte extraites du dispositif et un identifiant d'opération/de service du service exécuté par le dispositif.

9. Procédé selon la revendication 6, dans lequel chaque instance de l'information de contexte du dispositif est étiquetée avec l'adresse MAC de dispositif correspondante et l'identifiant de service du service exécuté par le dispositif.
